# EUROPEAN PATENT APPLICATION

(11) **EP 2 661 158 A1**
(43) Date of publication of application: **06.11.2013**
(21) Application number: 13002161.1
(22) Date of filing: 24.04.2013
(51) Int. Cl.: H05K 1/02, H05K 1/14

(54) **System for mechanical and electronic protection of safe equipment**

(30) Priority: 03.05.2012 BR 102012010461
(71) Applicant: Tecvan Informática LTDA., 45652-580 Ilheus (BR)
(72) Inventor: Pereira, Jorge Ribeiro, 09820-680 SAO Bernardo DO Campo (BR)
(74) Representative: Izquierdo Faces, José

(57) **Abstract**

To avoid an action to attempt to invade or violate Safe Equipment, it is suggested the implementation of a region completely surrounded by mechanical positioning of electronic circuits, mounted on rigid printed circuit boards or flexible circuits protection circuits and sensors with alarm devices, so that an invasion action will trigger the alarm, which will turn off the security keys and locks the Safe Equipment, disabling any action and preventing confidential data from being accessed; so, the security of information is enhanced by placing protection circuits mounted so that the mechanical arrangement of the parts of the equipment is considered to create a completely protected region, surrounded on all sides so that the access to this internal part is impossible.

## Description

It refers to the present descriptive report to the Privilege of Invention in the field of secure devices for transactions
and/or electronic transfers of securities. Such devices are characterized by being equipment subjected to fairly strict requirements, giving them high levels of security.

These devices running such electronic transfers of securities will be treated in this document by Safe Equipment. Points of Sale (POS) are Examples of Safe Equipment Terminals, the PINPAD Terminals and the Encrypted Keyboards, these latter widely used in self-service banking systems.

The Safe Equipment are, therefore, those applied to the banking transactions process; from payments by using cards in credit or debit transactions, either by reading the magnetic stripe, whether through reading the Smart Card ID chip, both for electronic contact chips and Contactless chips; and any other securities transaction that require electronic validation.

The Safe Equipment utilizes, in their data transfers, encryption to protect the content of information, thus protecting the required confidentiality.

Because they deal with financial transactions, the Safe Equipment is subject to attack by malicious individuals, acting unlawfully trying to insert circuits able to get the data from cards and record the users' passwords, such circuits are popularly known as "chupa cabra" ("goat sucker") and end up creating a database that will be then transmitted to some external equipment, such as a personal computer. This occurs through processes of communication that can be via Bluetooth, Wifi, GSM or similar.

These databases are used by fraudsters who use the information to create replicas of the cards. With these replicas they can perform monetary transactions, payments, etc., in an unauthorized manner, prejudicing the original card owner. This activity is popularly known as cards "cloning".

As the deployment of "goat sucker" devices inevitably requires that the Safe Equipment is violated and that unwanted circuits are installed to the main circuit of the Safe Equipment, being connected to system's electronic terminals, whether these connection terminals are between card readers, keyboard or any other readers in its connections with the Safe Equipment CPU, whether these are connection terminals of the Safe Equipment with external devices, such as microcomputers, for example, whether these are microprocessor general purpose terminals or any other electronic connection that there is in the system.

Attacks on Safe Equipment, achieved by installing undesired circuits can also have another purpose than the cards "cloning". In some cases, for example, the fraudulent action can have as aim to create copies of cryptographic keys, responsible for encoding information, of the Safe Equipment. That would allow, for example, that the encrypted data being Intercepted during any transaction.

Based on this scenario, where the Safe Equipment on the market are subject to fraudsters' unlawful action seeking to draw safety data from these Equipment, it is suggested in this document a constructive structure for the processing core of the Secure Devices which prevent access to critical points of the circuit with respect to the information security.

Thus, the objective of this invention is to provide a new form of constructive arrangement which provides electronic and mechanical protection of sensitive electronic circuits used in Safe Equipment against invasion, unauthorized acquisition and modification of data circuits contained within.

This protection consists in creating a protected cavity by assembling printed circuit boards (1,4), electronic components and flexible printed circuits (5), and a set of sensors suitably positioned.

Printed circuit board is an element of electronic equipment in which electrical conductive tracks are built on a rigid material such as phenolite or fiberglass. The printed circuit boards serve as a rigid base for soldering electronic components connecting them to the conductive tracks, thus forming an electronic circuit. In addition to the upper and lower surfaces of a printed circuit board, on which it is possible to weld components in their conductive tracks, a printed circuit board may also have several inner layers of conductive tracks. These inner layers are separated from each other and the surfaces of the layers by nonconductive rigid material, such as fiberglass. The inner and surface layers are electrically connected through routes.

The inner layers are not used for welding components, but they contain conductive, inaccessible, circuits in the form of a protective mesh (6) serving as a protective sensor against perforation of the plate. This mesh-shaped circuit is designed to trigger an alarm circuit if it ruptured by a piercing or short-circuited in an attempt to neutralize it. The use of these mesh circuits in the internal layers of a printed circuit board (1,4) has the advantage of keeping them inaccessible, hidden inside the board, since these are in an inner region, hampering its attack, and also leaving the board surfaces layers free for welding components.

Printed flexible circuit is an element of electronic equipment in which electrical conductive tracks are built on a flexible material. It is possible to weld components on a Flexible Printed Circuit; however, it is not a common practice, due to some technical difficulties. Flexible printed circuits are often used as conductive means of electrical signals, taking advantage of its flexibility. These serve to involve circuits or connecting moving parts.

Electronic components are elements that when connected together, in an organized manner, produce the desired operation when being traversed by an electric current. Electronic component is a generic name that includes resistors, capacitors, inductors, transistors, diodes, integrated circuits, connectors and an enormity of other types of elements of an electronic circuit The electronic components have conductor terminals which can be welded on printed circuit boards or connected on their proper connectors.

The innovation proposed in this report is in the disposition of printed circuit boards (1,4), components and flexible printed circuits (5), in order to create a secure niche, a place within the entirely reserved Safe Equipment, surrounded by printed circuit boards and also by flexible circuits, keeping it completely closed. This region of the Safe Equipment then becomes a zone resistant against any attempt of unauthorized invasion, acquisition and modification of its components therein and the information stored and manipulated by these components.

The constructive disposition for Safe Equipment electronic and mechanical protection refers to the creation of cavities joining printed circuit boards (4) with internal indentations (2) to other printed circuit boards (1) with components mounted so that sensitive components (3) fit inside the open indentation on indented boards. In order to protect this cavity, flexible printed circuit strips (5) are positioned on the open area of the cavity, or there may be or not electronic components between flexible printed circuit strips and the cavity.

Opening and drilling sensors, as contact switches and protective meshes (6) in printed circuit are used to monitor any attempt to penetrate the interior of the niche or separation of the set of boards (1,4), strips (5) and components (3) of the constructive disposition.

Electrical signals, whose parameters (amplitude, frequency, waveform and duration, among others) are changed randomly, are applied to protection circuits. A monitoring circuit inserted into the protected cavity continually checks the integrity of the signal. The sensors are contact switches that remain closed while the equipment is mounted, without being forced or violated, allowing the transmission of signals to different points of the security circuit Connectors and trails designed on printed circuit boards and on flexible circuit strips (5) in a zigzag format at a random pattern constituting a protection mesh (6). The system is composed of more than one circuit of sensor placed independently, so that an attempt to violate this protected core, disrupting any connection, or neutralizing the protective meshes (6) through short circuit will, consequently, activate an alarm of invasion.

The circuits of the sensors must be closed, i.e., meshes (6) must be intact, the switches contacts must be closed and the connectors (7) must be properly connected. Any situation other than this will interrupt the flow of the electrical current, causing an alarm to go off in the invasion monitoring circuit.

The existence of multiple sensors circuits hampers the attempt to neutralize them. To make protection more effective, the sensors are arranged in redundant mode, greatly hindering the unlawful action of any individual wishing to violate the protected niche.

The monitoring circuit of the security sensors, when detecting the invasion of the safe area or sensitive components, generates an alarm that destroys and disables secure and confidential information, used in the encryption process, and blocks the functioning of the safe process of the equipment. The destruction and disabling the secure information and the blocking of the safe processes are given as follows. All sensitive information stored in the device is kept encrypted by cryptographic keys. The encrypted sensitive information and cryptographic keys are stored in volatile memories. The operation of the sensitive processes of the equipment also depends on the cryptographic keys integrity. In the event of an alarm, the cryptographic keys are immediately deleted, stopping the operation of the safe processes and disabling the secure information content

Then, for better knowledge and understanding on how to constitute a constructive disposition described here, the following references are used:
1.- Printed circuit board
2.- Internal indention
3.- Sensitive components
4,4a.- Indented board
5.- Flexible circuit strips
6.- Protection mesh
7.- Connector
8.- Constructive disposition
9.- Security elements

In the attached illustrative drawings we can see:

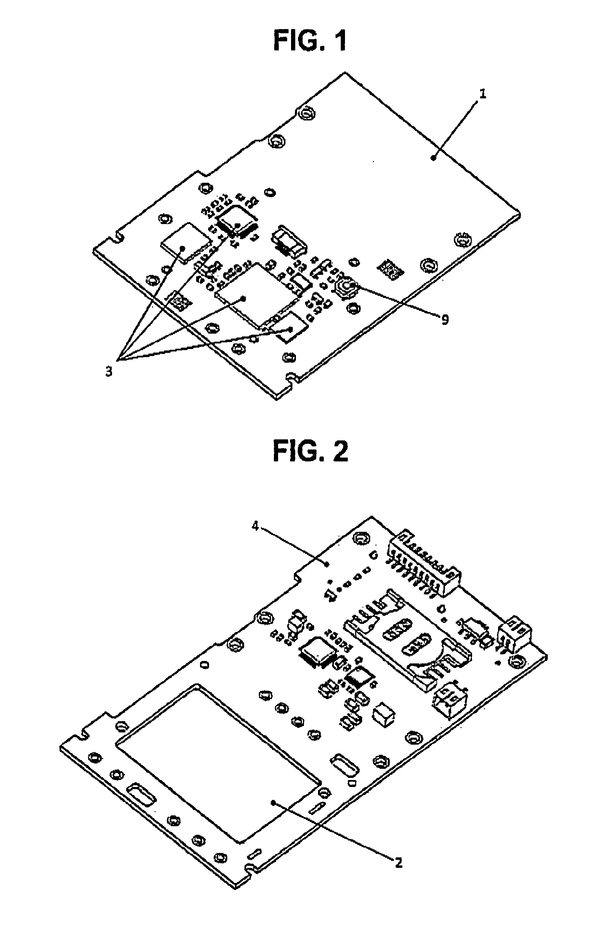

Figure 1 illustrates a printed circuit board (1) with electronic components mounted on both surfaces. In the picture we see in detail sensitive components (3) that will be protected by this constructive provision of protection.
Figure 2 illustrates another printed circuit board (4) with electronic components mounted on both surfaces and with an internal indention (2) which will serve for the formation of a safety cavity.

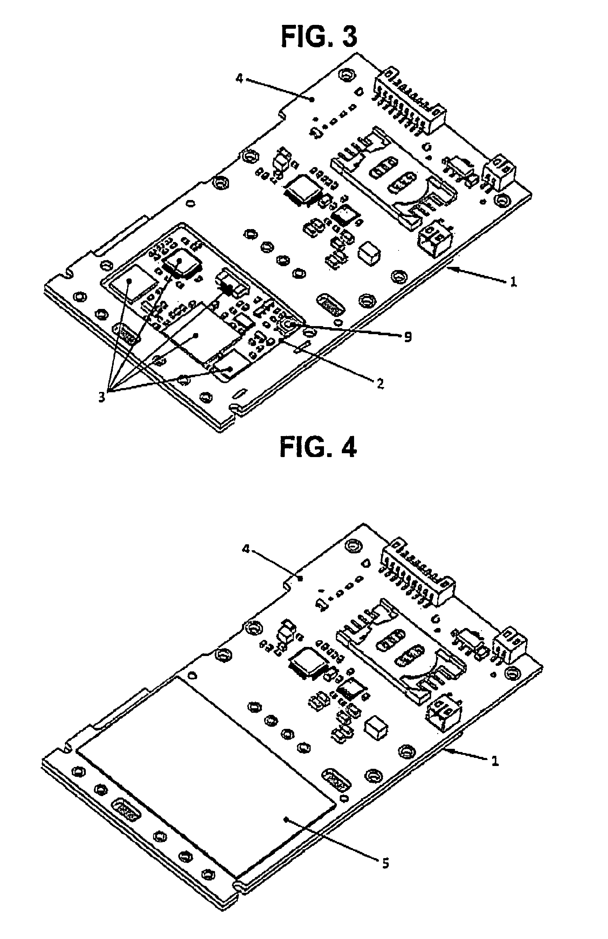

Figure 3 illustrates the two boards (1,4) positioned one over another, resulting in the safe cavity. In this figure other security elements (9) are detailed, such as the opening sensors switches.
Figure 4 shows the disposition of a flexible circuit strip (5), closing the protection constructive disposition.

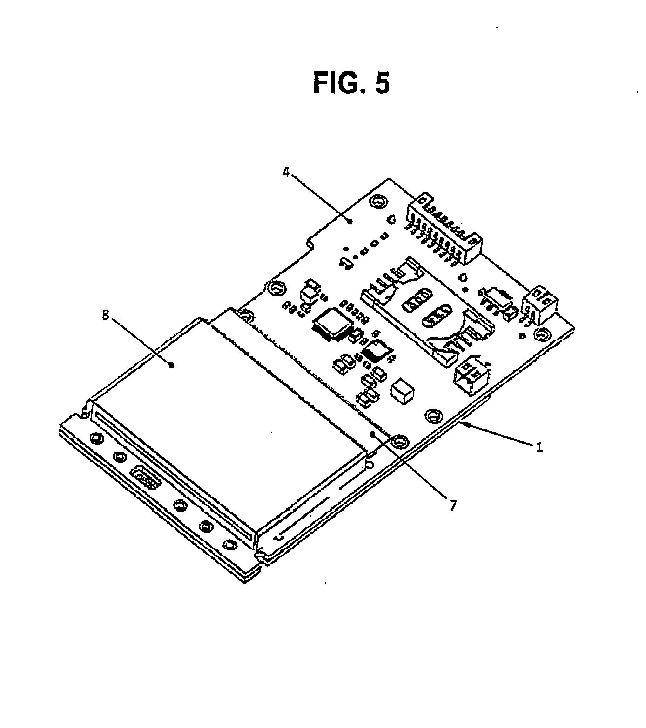

Figure 5 illustrates the placement of an electronic component, in the case a connector (7), being placed between the flexible circuit strip (5) and the cavity (2). Thus, the connector protects the cavity and is protected by constructive disposition (8).

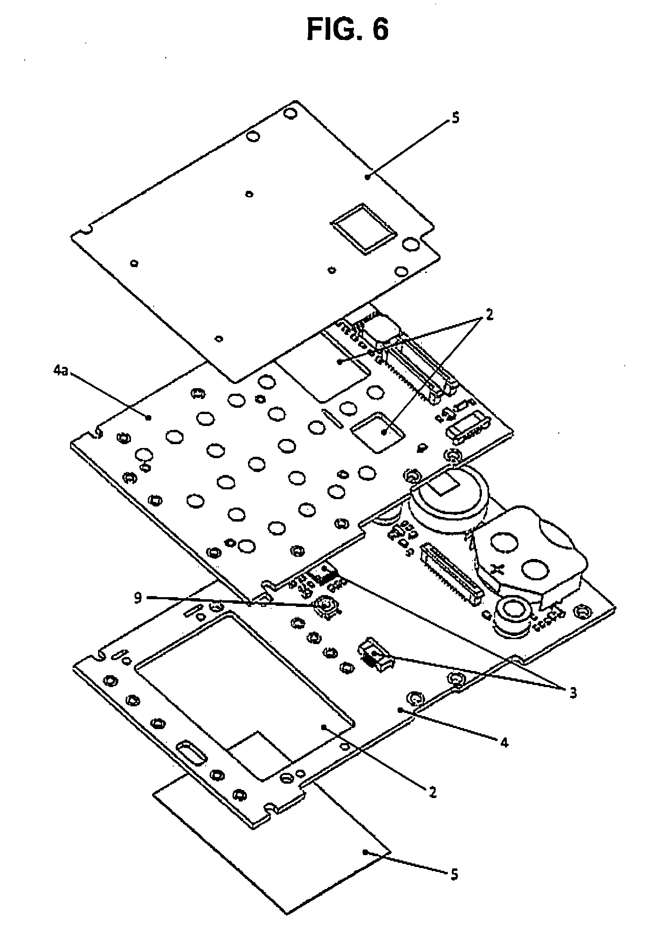

Figure 6 illustrates the constructive disposition of protection being reproduced in both printed circuit boards (4,4a), i.e., both boards have components being protected, and both boards have indentations (2) for forming cavity. Thus, two cavities are formed which are covered by flexible circuit strips (5) on both surfaces.

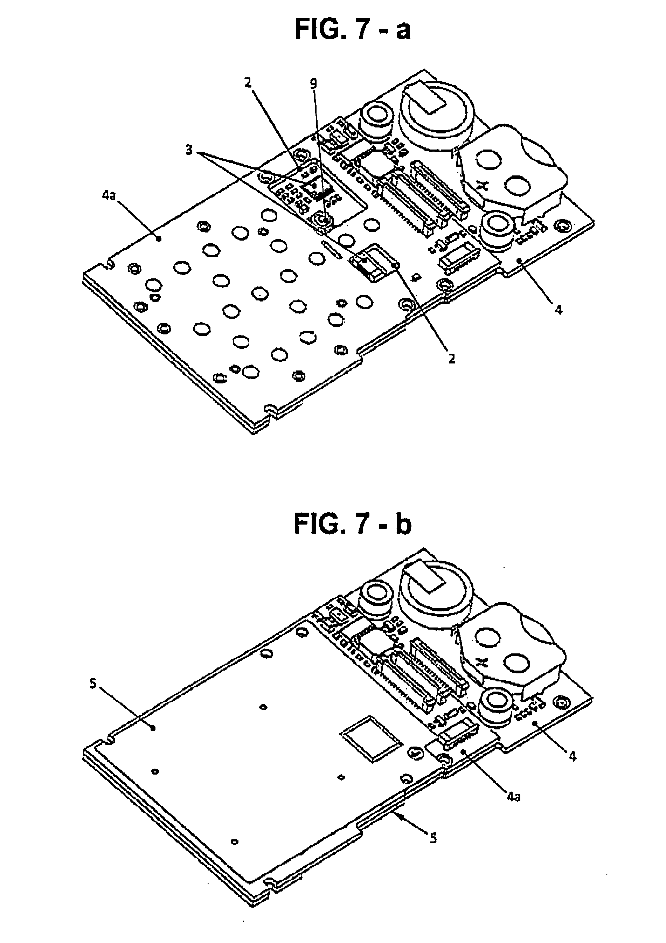

Figures 7-a and 7-b illustrate the constructive arrangement of protection of figure 6 mounted.

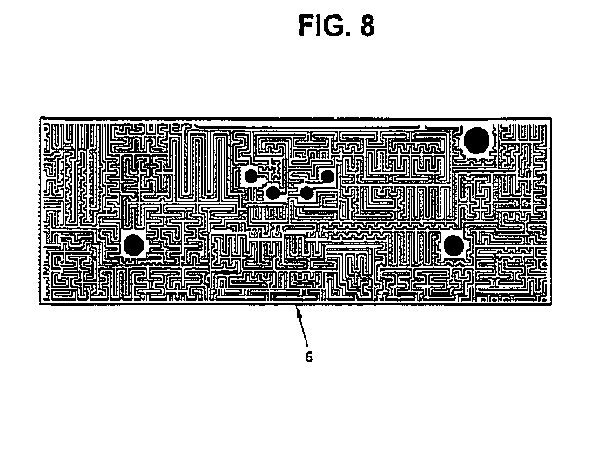

Figure 8 illustrates the pattern of tracks in form of protection mesh (6) of the flexible circuit strips (5) and in the printed circuit boards (1,4).

Thus, It can be verified by the foregoing that the concerned system is characterized as a method of great utility, presenting all the practical qualities and functionality that fully justify the patent application of Privilege of Invention.

## Claims

1. System for mechanical and electronic protection of safe equipment **characterized by** two or more printed circuit boards (1,4), so that at least on one of the boards an internal indention (2) is made and at least on the surface of one of the boards sensitive components (3) are mounted to be protected so that when uniting all boards the sensitive components (3) are embedded within the indention (2) of the indented boards (4), obtaining a safe cavity.

2. System for mechanical and electronic protection of safe equipment, according to claim 1, **characterized by** introducing a cover for one or more printed circuit strips (5), whether it is flexible or rigid, in the open area of the safe cavity and there may be or not components between the cavity and the flexible circuit strip (5).

3. System for mechanical and electronic protection of safe equipment, according to claim 1, **characterized by** the fact of the printed circuit boards (1,4) have conductive circuits in form of a protection mesh (6) that serves as sensor against the drilling of the board.

4. System for mechanical and electronic protection of safe equipment, according to claim 3, **characterized by** the fact that flexible circuit strips (5) have conductive circuits in form of a protective mesh (6) serving as sensor against drilling of the strip.

5. System for mechanical and electronic protection of safe equipment, according to claim 4, **characterized by** the fact of the set of boards (1,4) and strips (5) possess opening sensors such as contact switches and connectors that monitor the attempt for separation of the set

6. System for mechanical and electronic protection of safe equipment, according to claim 5, **characterized by** the fact that the disruption or short circuit of the protection meshes (6) and/or activation of the opening sensors generate an alarm that deletes or disables the secure information processed within the constructive disposition.
